Europäisches Patentamt

European Patent Office

Office européen des brevets

(19)

(11) Publication number: **0 075 480**
A2

# EUROPEAN PATENT APPLICATION

(21) Application number: **82304952.3**

(22) Date of filling: **21.09.82**

(51) Int. Cl.³: **H 04 L 25/49**

(30) Priority: **23.09.81 US 304756**

(43) Date of publication of application: **30.03.83**
**Bulletin 83/13**

(84) Designated Contracting States: **DE FR GB IT SE**

(71) Applicant: **Honeywell Information Systems Inc.,
200 Smith Street, Waltham Massachusetts 02154 (US)**

(72) Inventor: **Goss, Garry J., 93 Harris Street, Acton
Massachusetts (US)**
Inventor: **Moles, Robert G.H., 58 Old Lancaster Road,
Sudbury Massachusetts (US)**
Inventor: **Hinrichs, Randall D., 5 Sabina Way No. 4,
Belmont Massachusetts (US)**
Inventor: **Holtey, Thomas O., 10 Crehore Drive, Newton
Massachusetts (US)**

(74) Representative: **Harman, Michael Godfrey et al,
Honeywell Control Systems Ltd. Patent Department
Charles Square, Bracknell Berks RG12 1EB (GB)**

(54) Serial data communication system.

(57) A serial data communication system comprises digital send/receive logic 103 and analog send/receive circuitry 104. Data is transmitted over a bus 105, encoded as no pulse for a ONE, alternate positive and negative pulses for successive ZERO's. For transmitting, circuitry 103 includes a timing flip-flop which produces a ³/₄-bit-period STROBE signal for each ZERO, and a toggle flip-flop for pulse polarity. For receiving, incoming positive and negative pulses drive separate digital differentiators. A synchronizing counter is controlled to include an extra «tick» or omit a tick from a normal 16-tick bit period appropriately. A further counter detects a string of at elast 8 ONE's, representing the end of transmission, the data being pre-coded to ensure that such a string of ONE's cannot occur in true transmission of information.

EP 0 075 480 A2

## SERIAL DATA COMMUNICATION SYSTEM

This invention relates generally to computer communications systems, and more particularly to a serial communication interface for receiving and decding serial data from a communication channel.

It is known to use synchronous bit-oriented signalling, wherein the individual bits of the information to be transmitted are sent as a sequence of marks and spaces at regular intervals. With such systems, the information must be pre-coded before transmission to ensure that certain sequences of bits cannot occur. One reason for this is that the receiver must be kept in synchronism with the transmitter, and synchronism may be lost if there is too long a sequence of marks (or of spaces), which appears as a steady signal from which synchronizing information cannot be deried - it is only the changes from mark to space, and vice versa, which provide synchronizing information. Thus the pre-coding will be arranged to ensure that certain bits sequence cannot occur. Certain other bit sequences may be reserved for control purposes. Corresponding decoding is of course required after the information has passed through the communication system.

The usual technique used for such systems is to D.C. pulses to represent data, the pulses forming an on-off or mark-space configuration. By convention, the idle state wherein current is flowing is called the "ONE" state or "mark" condition; and the lack of current state is called the "ZERO" state, or "space" condition.

The primary object of the invention is to provide an improved serial computer communications system.

Accordingly the present invention provides a data transmission system characterized by: digital send logic including a timing flip-flop arranged to produce a strobe pulse for each ZERO to be sent, and a polarity flip-flop arranged to change state for each ZERO pulse to be sent; analog send circuitry, controlled by the digital send logic, which produces a pulse of polarity dependent on the polarity flip-flop in response to a strobe pulse;

analog receive circuitry which generates separate pulse outputs of the same polarity in response to incoming pulses of different polarities; and

digital receive logic including digital differentiating circuitry which produces a pulse of predetermined polarity and length in response to either pulse output from the analog receive circuitry.

A data communication system embodying the invention will now be described, by way of example, with reference to the drawings, in which:

Figure 1 is a schematic block diagram of the data communication interface.

Figures 2 and 3 are logic block diagrams of the digital receive logic.

Figure 4 is a logic block diagram of the digital transmit logic.

Figure 5 is a timing diagram.

The digital encoding scheme utilized by the system is as follows: (a) ZEROs generate pulses, whereas ONEs do not generate any pulse. (b) Successive pulses are of opposite polarity. Each pulse is approximately 3/4 of a bit time wide. An example shows how information is encoded as a series of + and - pulses and no pulses (0):

    data    :  0 1 1 1 0 1 1 0 0 ....
    coded as: + 0 0 0 - 0 0 + - ....

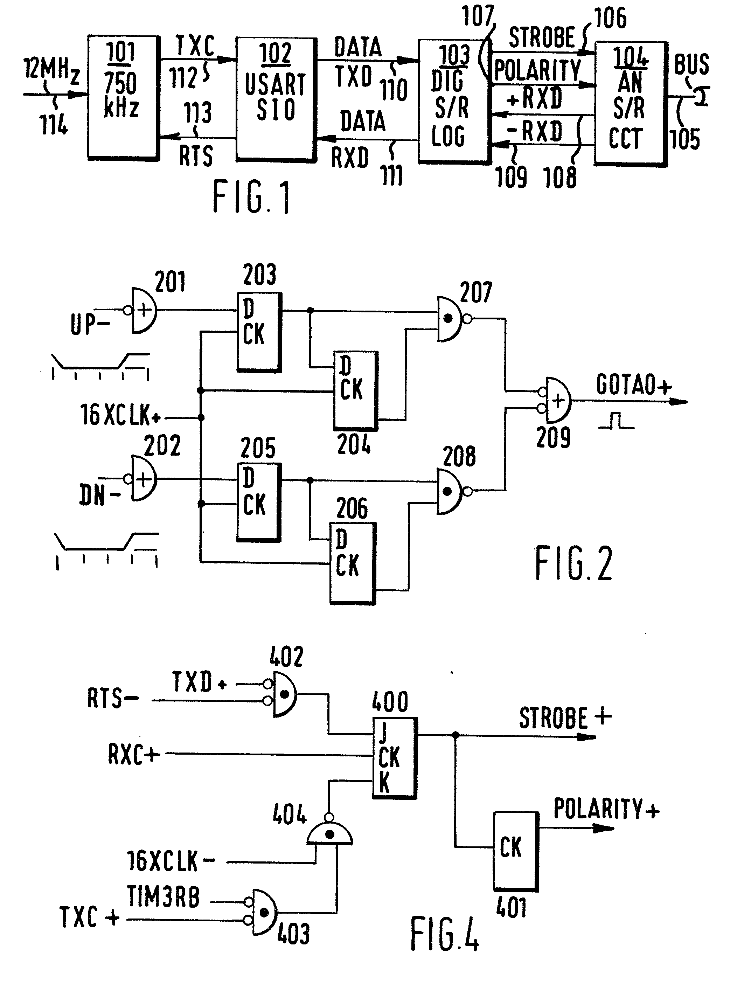

Referring now to Figure 1, the digital interface signals between digital send-receive and encode/decode logic 103 and the analog send-receive logic circuitry 104 consists of 4 signals, 2 utilized to send and 2 to receive. One signal POLARITY for sending is utilized for controlling the direction of polarity indication 107, and the other signal STROBE for sending is for pulse or strobe 106. In the send mode, the digital send-receive logic 103 generates a pulse every time that a ZERO is to be sent. Since digital pulses can be sent in one polarity only, it is necessary to have a direction signal on the line 107 indicating the polarity of the output pulse to be generated. Each time a ZERO is sent, the polarity signal reverses. Accordingly, when the strobe and polarity signals are received by the analog send-. receive circuitry 104, the analog circuitry generates a positive pulse when the polarity signal is plus and a negative pulse when the polarity signal is minus. This generated analog signal can then be placed on the coaxial cable bus 105.

In the receive mode there are also two signals. One signal 108 carries the plus data signal +RXD, whereas the next signal 109 carries the minus data signal -RXD. If there is a positive pulse being received by the digital send-receive logic 103, then a pulse occurs on the +RXD line 108. If there is a negative pulse being received by the digital send-receive logic 103, then a negative pulse occurs on the -RXD line 109.

The USART/SIO (universal synchronous/asynchronous receiver transmitter) 102 transmits and receives digital data on the TXD line 110 and RXD line 111, respectively. It also receives clock pulses from the 750 kHz clock generator 101 and on TXC line 112. The clock generator is a binary counter which receives 12 MHz clock pulses at its input 114, and divides them down by 16, to produce transmit clock signals TXC and receive clock signals RXC.

Referring now to Figure 2, flip-flops 203, 204, 205 and 206 together with their input and output gates 201, 202, 207 and 208 and 209 form a pair of logical differentiating circuits and generate a got-a-ZERO pulse GOTAO+ at the output of gate 209. The GOTAO+ pulse is generated each time an up or down data pulse is received on negative NOR gates 201, 202, respectively. Flip-flops 203-206 are clocked at 16 times clock or 12 MHz. The output terminals of gates 201 and 202 go high when a pulse UP or DN (negative and approximately 3/4th bit time wide) is received at the input terminals of gates 201 and 202, respectively. For an input UP- pulse, for example, flip-flop 203 will be set on the rising edge of the next "tick" of the 16 times clock. The next following "tick" will set flip-flop 204 as well. Gate 207 responds only to flip-flop 203 being set and flip-flop 204 being reset, and will therefore produce a negative pulse 1/16th of a bit time in width shortly after (up to 1/16th bit time) any negative pulse (of nominal 3/4 bit time width) occurs at the input of NAND 201. The same applies to the output of NAND gate 208 with respect to the input of NAND 202. NANDs 207 and 208 feed NAND 209 which produce a positive output when either of these two are negative.

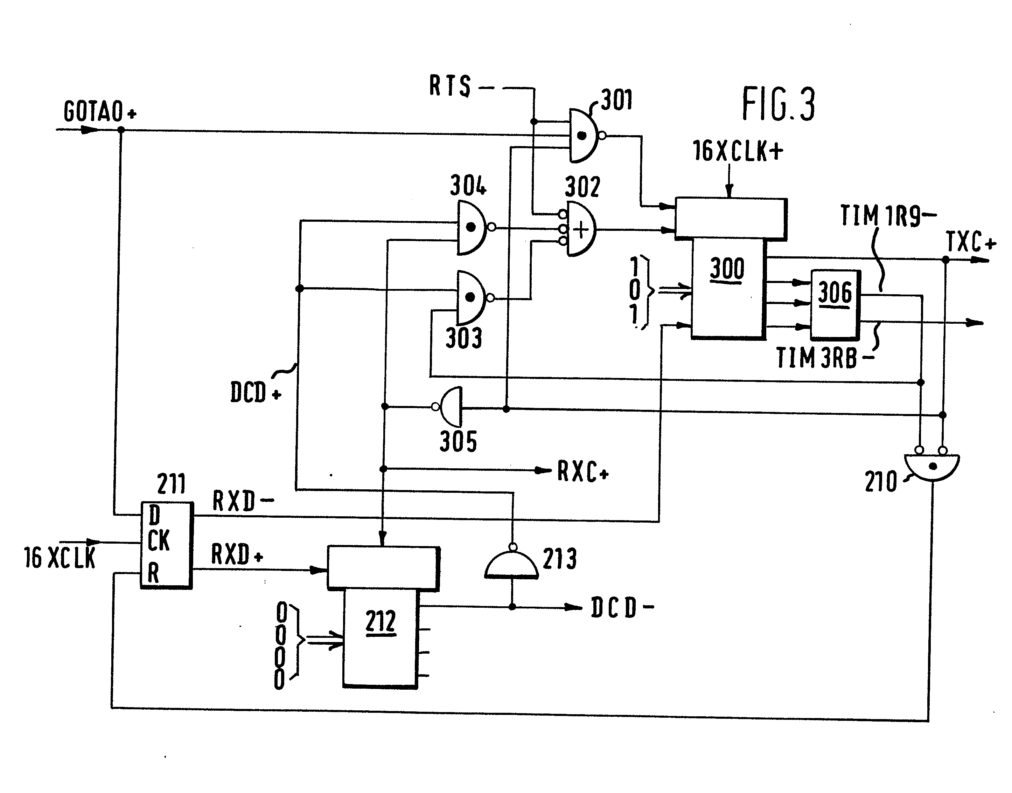

The GOTA0+ pulse is fed (Figure 3) to a flip-flop 211, which requires a negative clock input and is therefore clocked with the negation of the 16 times clock used to clock flip-flops 203-206. Therefore, its inputs are being sampled at the same instant (approximately) a those of flip-flops 203-206. Thus the flip-flop 211 will become set (indicating data equal ZERO) at the end of the 1/16th bit time interval when its input is positive due to the detection of an input pulse at the inputs of either NANDs 201 or 202 by the appropriate digital differentiator. The reset input of flip-flop 211 is fed by a NOR gate 210 which becomes positive during the second 1/16th bit time interval (TIME 01) of each bit time, as described below. Thus, flip-flop 211 reverts to (or remains in) the data equal ONE state at the end of TIME 01.

By referring to Figure 5, signal RXC is high for the first 8 ticks of a clock cycle and low for the next 8 ticks of the cycle. Signal TXC is the complement of signal RXC. It will be noted from Figure 5 that a GOTA0+ pulse can be received early, on time, or late when compared to the TXC and ANYZRO (any zero) signals. Accordingly when the GOTA0 signal is generated early, the set input of flip-flop 211 is high, the TXC+ signal (which is the inverse of the RXC signal) is low, but the TIM1R9 input is high (except at TIME 01) and accordingly the output of NAND gate 210 is low and is applied to the reset input terminal of flip-flop 211. Thus the falling edge of the inverse of the 16 times clock will set flip-flop 211. The RXD- signal from flip-flop 211 is now high; whereas the RXD- signal from flip-flop 211 low · for a DATA ZERO. This condition is also shown on the RXD- timing chart of Figure 5. By similar reasoning, when the GOTAO signal occurs late, the RXD- signal will be high.

The output terminal signal RXD+ from flip-flop 211 is fed to the enable input of a synchronous 4-bit binary direct-clear counter 212, which produces at its high order output terminal a signal DCD- and, via an inverter 213, a signal DCD+.

The signal DCD+ is fed to a similar counter 300, which is used to synchronize the circuitry in the receive mode, and divides the nominal bit times into sixteenths or "ticks". This counter can be loaded with the input value to it, which has the top 3 bits permanently set at 101 and the lowest order bit being the RXD- signal; thus this counter can be loaded with 1010 or 1011, i.e. decimal 10 or 11. This counter can be controlled to either expand or contract the bit time by 1 tick if required, as will be described later.

Counter 300 is controlled by gates 301 to 304. A signal RTS- (negative true Request to Send) is fed to gates 301 and 302; this signal comes from the USART/SIO 102 and is low during send operations and high during receive operations. When RTS- is low, during Send operations, the outputs of NANDs 301 and 302 are high, with the result that counter 300 simply counts continuously, producing output TXC- at its most significant bit output at 1/16th ·of the clock rate, i.e. at the bit rate. This signal is then sent to the SIO which will output serial data in synchronism with it. Signal TXC+ is inverted by gate 305 to produce signal RXC- which is also sent to the SIO and whose positive edge samples data into the SIO in Receive mode.

Counter 300 also serves to sub-divide each bit time into 16 intervals, named TIME 00 to TIME 15 starting from the negative edge of the most significant output (TXC+). Decoder 306 serves to partially decode eight of these states. It is wired such that output TIM1R9- is low during TIME 01 or TIME 09 and output TIM3RB- goes low during TIME 03 or TIME 11. These outputs can then be combined with the most significant output (TXC+/RXC+) of counter 300 to fully decode any of the 4 states TIME 01, TIME 03, TIME 09 and TIME 11 of the counter 300. In this way NOR gate 210 of Figure 2 described earlier is wired so that its output goes high during TIME 01.

Counter 212 is used to detect the presence/absence of received data. Counter 212 is clocked by RXC+. In the absence of any received data, the RXD+ signal which is connected to the control input of counter 212 will be high. This will cause the counter to count. The most significant bit of counter 212 is inverted by gate 213 to produce the signal DCD+. When counter 212 reaches a count of 8 (or happens to be initially in a state between 8 and 15), the signal DCD+ goes low which, as it will be shown later, stops the bit clock counter 300 in TIME 09. Both counters remain in this state until the first ZERO bit is received. At this time, RXD+ will go low as described earlier and will cause counter 212 to be cleared. This causes its most significant bit output to become low and, via gate 213, signal DCD+ to become high. This will enable counter 300 described below. As long as no more than seven consecutive ONE bits are detected, these conditions will prevail; i.e., the counter will count ONE bits but be reset by each ZERO bit so that signal DCD+ remains high. At the end of the transmission, the line goes idle (no data pulses), and when eight consecutive ONEs occur signal DCD+ once again goes low again stopping counter 300.

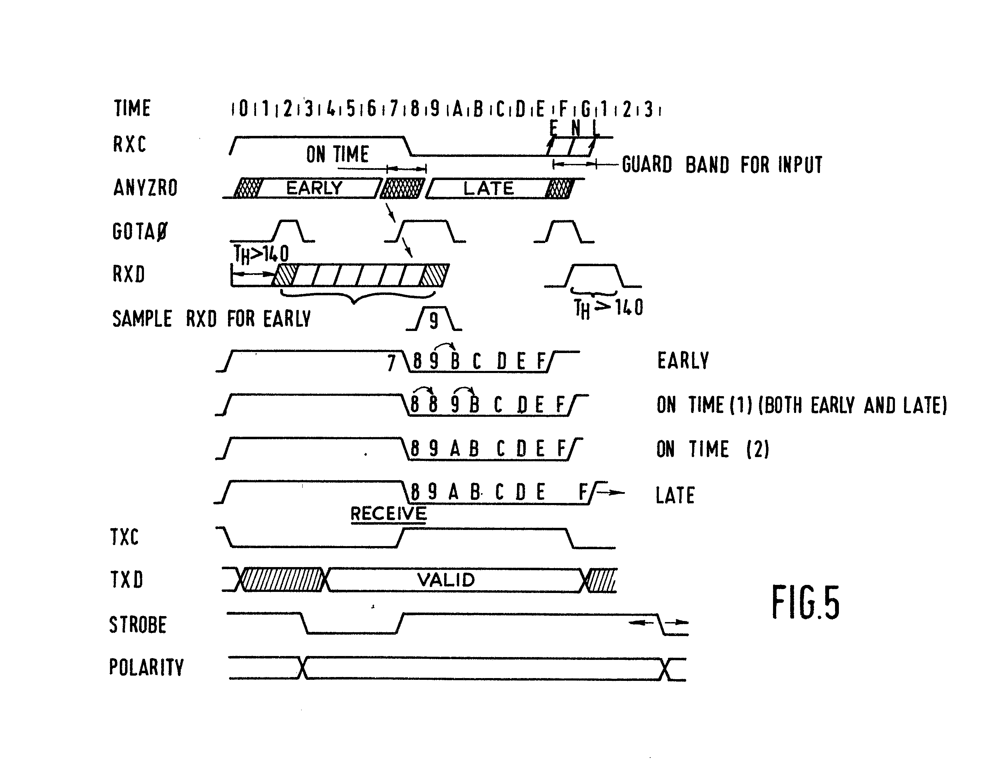

Referring now to Figure 4, in Send mode, the negative edge of the clock TXC+ is the active edge, and the data will be valid within 300 ns after this negative edge. Gate 402 produces a positive output whenever the Send data output from SIO is false (ZERO) and RTS- is low (Send mode). This output is fed to a flip-flop 400, at which the input is sampled by the falling edge of signal RXC at the clock input. The fall of RXC being coincident with the rise of TXC means that the data is sampled 1/2 bit time after it has become valid.

Gate 403 produces a positive output during TIME 03 (TIME 03 or TIME 11 and TXC being low). This output is ANDed with the negation of 16 times clock by gate 404 to eliminate any decoding spikes and its output, which goes low during the second half of TIME 03, resets flip-flop 400. Thus flip-flop 400 is set for approximately 11½ sixteenths of a bit time (from the beginning of a TIME 08 until half way through the subsequent TIME 03) for every ZERO bit that is transmitted.

The Q output of flip-flop 400 (strobe) feeds the clock input of a flip-flop 401 arranged so that its output reverses state on every falling edge of the STROBE signal and is used as the polarity control.

Referring now to Figure 3, the synchronizing operation will be described when the GOTA0 signal occurs early or late in the clock cycle. As explained above, the clock and data signals are generated at 750 kHz. On the other hand, the counter 300 is clocked at 16 times clock, or 12 MHz. The high order terminal of counter 300 serves as a transmit clock TXC+; the negation of the transmit clock serves as the receive clock RXC+.

In Receive mode, with signal RTS- at a high level, a NAND gate 301 serves to withhold one count pulse from counter 300 whenever the GOTA0 pulse occurs during the second half of a bit time. This is accomplished by its driving the count enable input (from gate 301) of counter 300 low for one 1/16th bit time interval if the signal GOTA0+ occurs while TXC+ is high (recall that TXC+ is high for exactly the second half of the bit interval; i.e. from TIME 08 to TIME 15). Thus, whichever state (with the exception of TIME 09, see below) counter 300 is in when a GOTA0 pulse occurs during the second half of the bit period, that state will last for 2/16th bit time rather than 1/16th bit time, and the clock is extended by 1/16th bit time.

Gates 303 and 304 serve both to hold counter 300 in the proper initial state under the idle condition (no data pulses received) as well as to adjust the counter state upon reception of any early GOTA0 (one occurring in the first half of bit interval). If no data is being received then signal DCD+ will be low as described earlier (counter 212 and gate 213). This causes the outputs of both gates 303 and 304 to be high. These together with the high on signal RTS- (since we're discussing Receive mode) causes the output of gate 302 to be a steady low. This being applied to the low input of counter 300 causes it to be in parallel-load mode. In this condition the binary values fed to it are copied into it on each positive edge of the 16 times clock. Since no data pulses are being received, signal RXD- is low (data = ONE) and the number fed to it is as 1010 or 10 (decimal). Thus counter 300 remains in state TIME 10 until the first ZERO bit is received. After the first ZERO bit has been received and signal DCD+ is high, then the output of gate 304 is low when signal RXC+ is high; i.e., for TIME 00 to TIME 07 while the output of gate 303 is low except during TIME 01 and TIME 09. Thus only during TIME 09 are all of the inputs to gate 302 high (recall that signal RTS- is high during Receive mode). Thus, the output of gate 302 goes low at every TIME 09 during Receive mode once the first ZERO bit has been received; and because gate 302 is connected to the load input of counter 300, it causes it to perform a parallel load operation at every TIME 09 and to count at all other times (unless inhibited by gate 301 via the T input as described earlier). The value that is loaded into the counter depends upon the state of signal RXD-. If no data pulse has been received by the end of TIME 08 (so that it can be sampled in TIME 09) then signal RXD- is low and a value of 10 (decimal) is loaded as in the idle state above. If, on the other hand, a data pulse has been received, then signal RXD- will be high, a value of 1011 (binary) i.e. 11 (decimal) will be loaded, state TIME 10 will be omitted, and the clock· signal will be contracted by 1/16th bit time.

It is to be noted that the count  inhibiting action of gate 301 is nullified, if the GOTA0 pulse occurs in either TIME 08 or TIME 09. In the former case, the inhibit does take place but because the GOTA0 is received in time, TIME 10 is omitted as described earlier. In this case, the GOTA0 pulse is actually detected by both the early pulse circuitry (gates 303, 304 and the present of RXD- on the input of counter 300) as well as the late pulse circuitry (gate 301) so that the count sequence becomes -- ..., 7, 8, 8, 9, 11,-- and the total duration (and symmetry) of the clock is not affected. In the case where the signal GOTA0 occurs during TIME 09, gate 301 can have  no effect due to the L input of counter 300 being driven low by gates 302, 303 and 304 and the fact that parallel loading takes precedence over counting on the counter. Thus, there is a 2/16th bit time "dead band" consisting of TIME 08 and TIME 09 with respect to the occurrence of GOTA0 during which the detection of an input pulse will cause no adjustment. At the other extreme, late pulses must occur by the end of TIME 14 so that GOTA0 occurs in TIME 15 and RXD+ goes low at the end of TIME 15 (this is nominally coincident with the active transition of RXC and suitable safeguards are employed to prevent the transition of RXD from being after the RXC transition of the SIO). Also, GOTA0 pulses which occur during TIME 00 or TIME 01 must be considered invalid due to the action  of gate 210 and also at high data rates of the hold time requirement of the SIO (140 nanoseconds). Thus, we have a symmetrical arrangement with a dead-band and a guard-band each 2/16ths bit time duration and separated from each other by two active regions of 6/16ths bit time duration.

## CLAIMS

1. A data transmission system characterized by:
digital send logic (Figure 4) including a time flip-flop (400) arranged to produce a strobe pulse for each ZERO to be sent, and a polarity flip-flop (401) arranged to change state for each ZERO pulse to be sent;
analog send circuitry (104), controlled by the digital send logic, which produce a pulse of polarity dependent on the polarity flip-flop in response to a strobe pulse;
analog receive circuitry (104) which generates separate pulse outputs of the same polarity in response to incoming pulses of different polarities; and
digital receive logic (Figures 2 and 3) including digital differentiating circuitry (Figure 2) which produce a pulse of predetermined polarity and length in response to either pulse output from the analog receive circuitry.

2. A system according to Claim 1, characterized in that the digital differentiating circuitry comprises, for each pulse output, a pair of flip-flops (203, 204; 205, 206) coupled in series and driving AND means (207; 208) responsive to the set state of the first and the reset state of the second.

3. A system according to either previous claim, characterized in that the digital receive logic includes a clock pulse generator (300) which divides each bit period into a predetermined plurality of sub-periods (ticks), and synchronizing circuitry (301-304) which compares the actual time of receipt of an incoming ZERO with its nominal time in the bit period and lengthens or shortens the counter cycle by 1 tick in the event of the actual ZERO pulse being late or early respectively.

4. A system according to any previous claim, characterized in that the digital receive logic includes a pulse counter (212) which detects when a predetermined number of successive ONE pulses have been received.

0075480

1/3

FIG.1

FIG.2

FIG.4

0075480

FIG.3

FIG.5

TIME: 0 1 2 3 4 5 6 7 8 9 A B C D E F G 1 2 3

RXC — ON TIME — GUARD BAND FOR INPUT

ANYZRO — EARLY — LATE

GOTA∅

RXD — $T_H > 140$

SAMPLE RXD FOR EARLY

7 8 9 B C D E F — EARLY

8 8 9 B C D E F — ON TIME (1) (BOTH EARLY AND LATE)

8 9 A B C D E F — ON TIME (2)

8 9 A B C D E F — LATE

RECEIVE

TXC

TXD — VALID

STROBE

POLARITY

$T_H > 140$

3/3

0075480